(19) Europäisches Patentamt / European Patent Office / Office européen des brevets

(11) **EP 3 626 468 B1**

(12) **EUROPEAN PATENT SPECIFICATION**

(45) Date of publication and mention
of the grant of the patent:
**24.08.2022 Bulletin 2022/34**

(21) Application number: **18202598.1**

(22) Date of filing: **25.10.2018**

(51) International Patent Classification (IPC):
**B41M 3/00** *(2006.01)*        **B41M 7/00** *(2006.01)*
**B41J 2/21** *(2006.01)*

(52) Cooperative Patent Classification (CPC):
**B41M 7/0081; B41J 11/00214; B41M 3/008;
G06K 15/027; H04N 1/6033**

(54) **METHOD FOR PRINTING CALIBRATION MARKERS IN INKJET PRINTERS**

VERFAHREN ZUM DRUCKEN VON KALIBRIERMARKERN IN TINTENSTRAHLDRUCKERN

PROCÉDÉ D'IMPRESSION DE MARQUEURS D'ÉTALONNAGE DANS DES IMPRIMANTES À JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2018 EP 18195812**

(43) Date of publication of application:
**25.03.2020 Bulletin 2020/13**

(73) Proprietor: **Canon Production Printing Holding
B.V.
5914 HH Venlo (NL)**

(72) Inventors:
• **PÉREZ MUÑOZ, Juan C.
5914 CA Venlo (NL)**

• **VAN DONGEN, Peter J. W.
5914 CA Venlo (NL)**
• **BOEREN, Frank A. J.
5914 CA Venlo (NL)**

(74) Representative: **Canon Production Printing IP
Department
Canon Production Printing Netherlands B.V.
Van der Grintenstraat 10
5914 HH Venlo (NL)**

(56) References cited:
**EP-A1- 2 960 062        US-A1- 2004 179 217
US-A1- 2017 341 416**

## Description

### FIELD OF THE INVENTION

The present invention generally pertains to a method for printing calibration markers in an inkjet printer.

### BACKGROUND ART

Printing an image comprising multiple colors in an inkjet printer wherein registration marks are printed which assist in aligning the color images is well known in the art, see for example US2017/341416A1.

Media calibration is a well-known process in the art. Such methods commonly comprise printing and scanning one or more calibration markers onto a recording medium, which are used to calibrate the average value of a media step. This media calibration process is essential in order to achieve high print quality, as it minimizes undesired light and dark stripes between consecutive swaths.

It is also known in the art that it is sometimes difficult for the inkjet printer to interpret the calibration markers which have been previously printed onto the recording medium. Said difficulty may be caused by the inkjet printer not being capable of correctly interpreting the calibration markers, especially when particular types of recording media, as transparent or meshed, are used.

When an inkjet printer is incapable of correctly interpreting calibration markers, its media step calibration likely fails, thereby rendering the recording medium unusable by the inkjet printer.

It is therefore needed to provide a method for printing a calibration marker that improves the readability of the calibration markers typically printed on recording media.

### SUMMARY OF THE INVENTION

In an aspect of the present invention, a method for printing calibration markers in a scanning jet printer is provided. The inkjet printer comprises a pinning lamp suitable for applying a ultraviolet, UV, light to a UV light-curable ink. The method comprises printing a contrast plane on the recording medium with UV light-curable ink of a first color. Subsequently, the method comprises at least partially curing the contrast plane printed on the recording medium by applying a ultraviolet, UV, light to the contrast plane with the pinning lamp. A full cure of the contrast plane is not needed. As a consequence, the contrast plane is usually only partially cured such that printing can be immediately performed onto the contrast plane without any detrimental effect. If deemed required, the contrast plane containing the marker can be post-cured. The use of the pinning lamp to cure the printed contrast plane, allows immediately printing a calibration marker onto the contrast plane, which improves the readability of the calibration marker. In turn, this allows the present invention to more accurately calculate reliable media steps, based on the inkjet printer scanning the printed plurality of calibration markers.

In the method of the invention the droplets are pinned by irradiating the droplets with a UV radiation source, wherein the intensity of radiation provided to the ink by the radiation source is adjustable.

Irradiation with a suitable source of radiation may be a suitable way to pin the radiation-curable phase change ink composition. Examples of suitable radiation are electron beam radiation or UV radiation. UV radiation may be suitably applied to cure UV curable ink. Example of UV radiation sources are UV lamps, such as UV LED lamps and Hg bulbs. UV LEDs are preferred, because they are energy efficient and because the intensity of the radiation emitted by UV LEDs can be easily adjusted.

The intensity of radiation provided to the ink may be adjustable. This may be done e.g. by changing the distance between the source of radiation and the recording medium provided with ink. Alternatively and/or additionally, the intensity of the radiation emitted by the source of radiation may be adjusted.

The intensity of the radiation emitted onto the ink by the source of radiation may be in the range of 0.5 $W/cm^2$ - 8 $W/cm^2$, preferably 1 $W/cm^2$ - 4 $W/cm^2$. Intensities of radiation between 1 $W/cm^2$ - 4 $W/cm^2$ are considered in the art as low dosages of radiation which, with the typical applications times of pinning lamps (imposed by the speed of the carriage over the recording medium) do not fully cure the ink. The intensity of the radiation may be measured at the surface of the recording medium. When the intensity of the radiation emitted onto the ink by the first source of radiation is lower than 0.5 $W/cm^2$, then the pinning may be ineffective and consequently, the ink may still penetrate the recording medium. When the intensity of the radiation emitted onto the ink by the first source of radiation exceeds than 8 $W/cm^2$, the degree of polymerization may be too high. When the degree of polymerization induced by the first radiation is too high, then the ink may be considered cured instead of pinned. Curing the ink without pinning the ink may result in decrease of gloss of the ink. As the pinning lamp is typically attached to a carriage of an inkjet printer, the application time is usually short, and depends on the speed with which the carriage travels over the recording medium.

In the present invention, UV, light is applied to the calibration marker with the pinning lamp. As explained more in detail below, applying ultraviolet light causes the ink droplets to move to a higher viscosity state, yet said ink droplets stop short of full cure. In an embodiment of the method according to the present invention, the present invention further comprises comprising curing the calibration marker printed on the recording medium by applying ultraviolet, UV, light to the calibration marker with the pinning lamp.

In an embodiment of the method according to the present invention, the present invention comprises a recording medium which is transparent or meshed.

In an embodiment of the method according to the present invention, the inkjet printer of the present invention further comprises a scanner for scanning the calibration marker.

In the method according to the present invention, the inkjet printer is a scanning inkjet printer.

In an embodiment of the method according to the present invention, the contrast ratio between the first color and the second color is at least 3, preferably at least 4.5.

In an embodiment of the method according to the present invention, printing a contrast plane on the recording medium with UV light-curable ink of a first color comprises printing a plurality of contrast planes with UV light-curable ink of a first color, and wherein a calibration marker with UV light-curable is printed with ink of a second color onto each of the plurality of printed contrast planes such that each of the plurality of printed contrast planes forms a uniform background for one of the plurality of printed calibration markers. This embodiment allows printing a plurality of calibration markers for which a contrast plane acts as a uniform background, thereby improving the readability of said plurality of calibration markers. Further, it allows detecting and correcting misalignments of recording media.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention which is defined in the appended claims will become apparent to those skilled in the art from this detailed description.

## BRIEF DESCRIPTION OF THE DRAWINGS

The present invention will become more fully understood from the detailed description given herein below and the accompanying schematic drawings which are given by way of illustration only, and thus are not limitative of the present invention, and wherein:

Fig. 1      shows a schematic perspective view of an assembly of a guiding structure and a print head carriage in a scanning-type printer, the print head carriage carrying a print head;

Fig. 2a     shows an example of calibration markers used in the context of the present invention;

Fig. 2b     shows an additional example of calibration markers used in the context of the present invention;

Fig. 2c     shows another example of calibration markers used in the context of the present invention;

Fig. 3      is a flow diagram of the method of the present invention;

Fig. 4a     shows an example of the a prior art method for printing calibration markers;

Fig. 4b     shows an example of the method of the present invention for printing calibration markers;

## DETAILED DESCRIPTION OF THE DRAWINGS

The present invention will now be described with reference to the accompanying drawings, wherein the same reference numerals have been used to identify the same or similar elements throughout the several views.

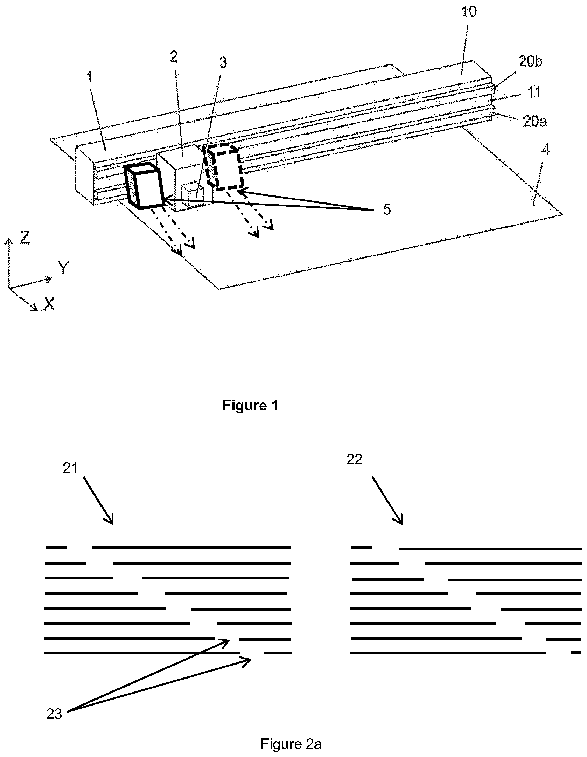

With reference to Fig. 1, a scanning-type inkjet printer comprises an inkjet print head 3 mounted on a print head carriage 2 arranged to move relative to a recording medium 4 along a first horizontal axis Y while being guided by a guiding structure 1. Scanning inkjet printers as that depicted in Fig. 1 are one of the types of printers on which the present invention may be applied.

Either the guiding structure 1 or the recording medium 4 is movably arranged in order for the guiding structure 1 and the recording medium 4 to be moved relative to each other along a second horizontal axis X normal to the first horizontal axis Y.

In operation, a swath of ink droplets is deposited onto the recording medium 4 by the print head 3 ejecting sequences of ink droplets towards the recording medium 4 while the print head carriage 2 is moving along the first horizontal axis Y, guided by the guiding structure 1.

In between the deposition of different swaths, the guiding structure 1 and the recording medium 4 are moved relative to each other along the second horizontal axis X, so that multiple swaths of ink droplets deposited onto the recording medium 4 can form a complete printed image.

In the shown embodiment, the guiding structure 1 comprises an elongated main part 10, oriented to extend along the first horizontal axis Y.

The guiding structure 1 further comprises a pair of primary guidance rails 20a, 20b, mounted above each other on a front face 11 of the main part 10 oriented orthogonally with respect to the second horizontal axis X. The primary guidance rails 20a, 20b extend in parallel to each other along the first horizontal axis Y, spaced apart along the vertical axis Z.

Fig. 1 also shows two pinning lamps 5 attached to the carriage 2. Said pinning lamps are suitable for applying ultraviolet, UV, light onto ink previously deposited onto recording medium 4. The pinning lamp situated at the left of the carriage 2 in Fig.1 takes care of applying UV light to the ink deposited by printhead 3 while the print head carriage 2 displaces from right to left along the first horizontal axis Y, while the pinning lamp situated at the right of the carriage 2 in Fig.1 takes care of applying UV light to the ink deposited by printhead 3 while the print head carriage 2 displaces from left to right along the first horizontal axis Y.

The present invention may be applied to scanning inkjet printers as the inkjet printer shown in Fig. 1.

A person skilled in the art would readily appreciate that the present invention may be however applied in any inkjet printer provided that said inkjet printer comprises at least one pinning lamp for applying ultraviolet, UV, light to a UV light-curable ink.

With reference to Fig. 2a, an example of calibration markers used in the context of the present invention is shown. Fig. 2a comprises a reference marker 21 and a test marker 22. It can be observed in Fig. 2a that the reference marker 21 and the test marker 22 are formed by a plurality of lines, wherein said lines include notches 23, understood as indentations, incisions, or discontinuities on an edge or line. Said notches are strategically placed such that the notches form a numbering system from which the different lines forming the reference marker 21 and a test marker 22 can be individually distinguished. The reference marker 21 and the test marker 22 are used to measure the calibration error. In order to do so, the reference marker 21 is printed with the first nozzles of a printhead, while the test marker 22 is printed with the last nozzles of said printhead once the media step has been performed. As the information about their position is known beforehand, the relative error attributable to the movement of the recording medium can be reliably inferred.

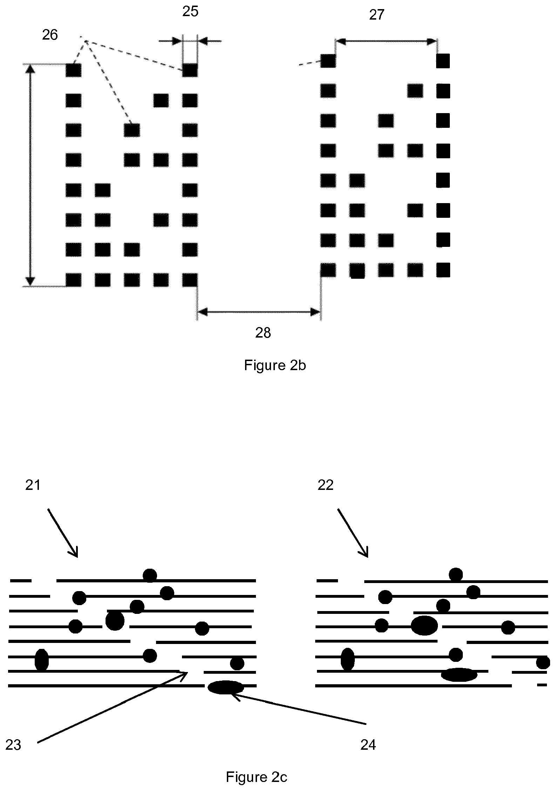

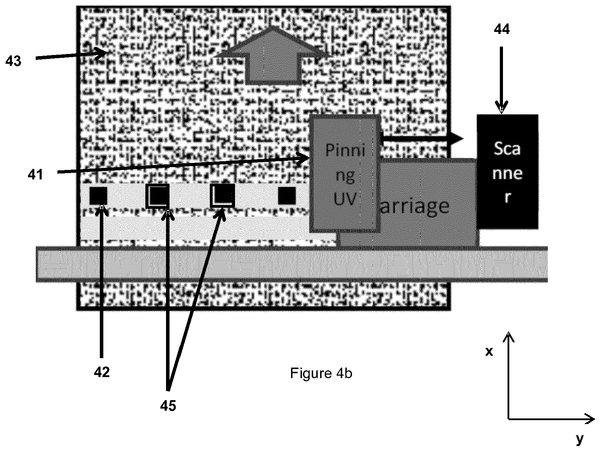

It is known in the art printing reference marker 21 and test marker 22 using colors with an intense color contrast with the recording medium. Further, it is also known using light of different predominant wavelengths in order to facilitate the scanning of the calibration markers. For example, it is known using a predominantly yellow light to illuminate yellow markers printed onto a predominantly white recording medium. In this way, the markers absorb most of the emitted light, which improves the accuracy of the scanning process. These techniques do not allow, however, accurately detecting calibration markers printed on transparent or meshed media, as it is better understood in relation with the explanations related to Fig. 2c and Fig. 4b below.

With reference to Fig. 2b, an additional example of calibration markers used in the context of the present invention is shown. Fig. 2b shows a bit-based pattern in which the lines of a calibration marker shown in Fig. 2a are substituted by lines referred to as bits in the art, which have the characteristics of being extremely short. Said bits are formed by very short lines as indicated in Fig. 2b by the width 25 of one of the bit markers 26 of Fig. 2b. Instead of notches, as in the example of Fig. 2a, the marker shown in Fig. 2b uses a binary code to indicate the line number of each bit. In Fig. 2b, element 27 is used as a binary code to indicate the line numbering. In the pattern of Fig. 2b, it can be observed that the line numbering is incremented one unit for every line, the first line having a decimal value 0 and the last line having a decimal value 7, knowing that the most significant bit of element 27 is that at the left of element 27. Fig. 2b also indicates the distance 28 between the reference marker (left) and the test marker (right). Similarly to Fig. 2a, as the information about their position is known beforehand, the relative error attributable to the movement of the recording medium can be reliably inferred.

With reference to Fig. 2c, another example of calibration markers used in the context of the present invention is presented. It can be observed that Fig. 2c is similar to Fig. 2a in that it displays a reference marker 21 and a test marker 22, wherein both markers contain a plurality of notches used to indicate the different line numberings. In Fig. 2c, a plurality of see-through elements 24 can be observed, caused by the characteristics of the recording medium. A person skilled in the art would readily understand that see-through elements 24 are present whenever transparent or meshed recording media are used. Said see-through elements 24 highly increase the likelihood of misinterpretation of the calibration markers 21 and 22 by a scanner, even in the case in which there is appropriate color contrast between the markers and the recording medium.

A person skilled in the art would readily understand that the considerations related to Fig. 2c similarly apply to the calibration markers referred to in Fig. 2b, as well as to any other calibration marker typically used in the art.

It can be observed in Fig. 2c that the reference marker 21 and the test marker 22 lay on a non-uniform background. Said non-uniform background comprises the recording media onto which the reference marker 21 and the test marker 22 have been printed, as well as the background formed by see-through elements 24. This non-uniformity leads to inaccurate detection of the reference marker 21 and the test marker 22 even if a good color contrast exists between reference marker 21 and the test marker 22 and the recording medium, as explained in more detail below.

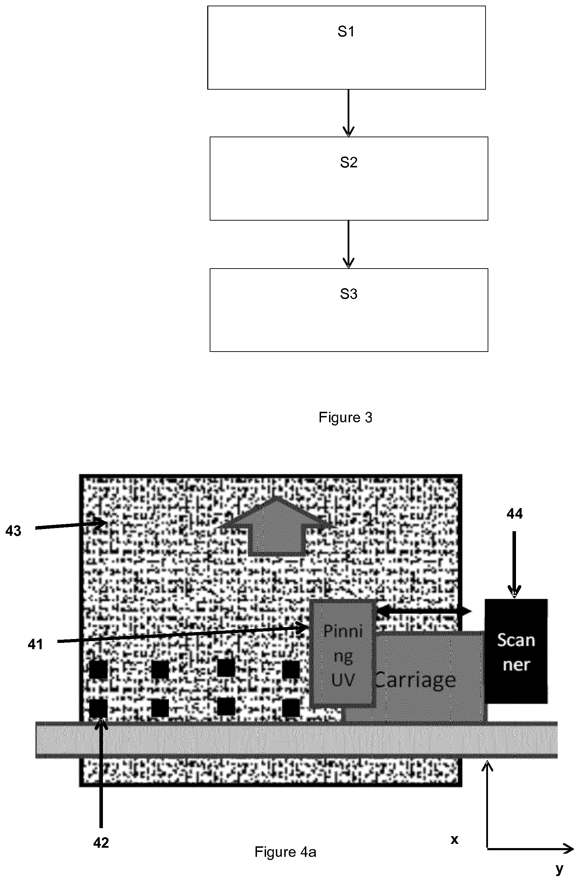

With reference to Fig. 3, a flow diagram of the method of the present invention is presented.

In the present invention, step S1 of the method of the present invention comprises the inkjet printer printing a contrast plane on the recording medium with UV light-curable ink of a first color.

Subsequently, the contrast plane printed on the recording medium in step S1 is cured in step S2 of the method of the present invention by applying ultraviolet, UV, light to the contrast plane with the pinning lamp. As a result of the application of ultraviolet, UV, light to the contrast plane with the pinning lamp, the ink droplets move to a higher viscosity state, but stop short of full cure. This process is known in the art as gelling of a UV light-curable ink. This step allows a quick curing of the printed contrast plane, which in turn allows immediately printing onto the printed contrast plane, without the need of transporting the recording medium to a curing stage as commonly known in the art, in which the recording medium is transported under a plurality of UV curing lamps in order to launch a process in which ultraviolet light and visible light is used to initiate a photochemical reaction that generates a crosslinked network of polymers in the ink, reaching full cure of the UV light-curable ink.

Next, in step S3 the inkjet printer of the present invention comprises printing a calibration marker with UV light-curable ink of a second color onto the printed contrast plane, wherein the first color and the second color have a contrast ratio higher than 1. In this way, the present invention allows providing a calibration marker which is easily distinguishable for a scanner from the background consisting of the contrast plane. A person skilled in the art would readily understand that it is within the scope of the present invention which is defined in the appended claims printing and curing with a pinning lamp a plurality of contrast planes such that a plurality of calibration markers can be printed onto them, which improves the media steps calculations.

The contrast ratio between two colors can be defined as the ratio of the luminance of the brightest color to that of the darkest color, as shown in Equation 1:

$$\text{Equation (1)} \quad \text{Contrast Ratio} = L_{high} / L_{low}$$

wherein the luminance is a photometric measure of the luminous intensity per unit area of light travelling in a given direction. The luminance describes the amount of light that passes through, is emitted or reflected from a particular area, and falls within a given solid angle. The SI unit for luminance is candela per square meter ($cd/m^2$).

Therefore, the self-contrast ratio of any color is 1. In applications in which it required that an area printed in a first color must be distinguished, either by an external observer or a scanner dedicated to that task, from a second area printed in a second color it is required that a high contrast ratio exists between a first and a second color.

Such high contrast ratio has been defined in other fields of technology as web design as at least a ratio of 4.5, in order to allow easily distinguishing by an external observer a first area in a first color from a second area in a second color. The inventor has determined, however, that a contrast ratio of 3 is sufficient for applications like inkjet printing, in which typically a scanner needs to distinguish between an area printed in a first color from a second area printed in a second color. A ratio of at least 4.5 is however preferable.

However, as explained above, it is not enough selecting an appropriate color contrast ratio to improve the detection of calibration markers, as non-uniformities in the background, typical in meshed or transparent media, hinder the readability of the calibration markers.

Optionally, the present invention may comprise an additional step of curing the calibration marker printed on the recording medium, more particularly onto the contrast plane printed thereon, by applying ultraviolet, UV, light to the calibration marker with the pinning lamp. This step provides calibration markers which do not flow out before a curing phase, and are therefore more easily recognizable for a scanner as those typically used in these applications.

With reference to Fig. 4a, an example of a prior art method for printing calibration markers is shown.

In Fig. 4a a plurality of calibration markers 42 which have been printed onto a recording medium 43 can be observed. As a mere example, the recording medium 43 shown in Fig. 4a is meshed. A person skilled in the art would readily understand that the present invention may be applied to any recording medium for which there is a difficulty to interpret calibration markers printed thereon. For example, when a transparent recording medium is used, the belt on top on which the recording medium is transported can be seen through the recording medium, which causes said belt, usually black, to be the background of the calibration markers. The plurality of calibration markers 42 is designed such that subsequently a scanner 44 can read them in order to calibrate the media steps needed for the recording medium 43.

It can be observed in Fig. 4a, and it becomes clearer in the explanation of Fig. 4b below, that there is an insufficient contrast between the printed calibration markers 42 and the background formed by the recording medium 43, thereby causing a difficulty for a scanner 44 on the inkjet printer to interpret the calibration markers when calculating media steps for every swath.

With reference to Fig. 4b, an example of the method of the present invention for printing calibration markers is shown. It can be observed in Fig. 4b that a contrast plane 45 has been printed such that it forms a uniform background for the plurality of calibration markers 42. It should be noted that in the method of the present invention the contrast plane 45 is cured by applying ultraviolet, UV, light to the contrast plane 45 with the pinning lamp of the inkjet printer. In this manner, it becomes possible to immediately print the plurality of calibration markers 42 onto the cured contrast plane 45, thereby allowing performing the complete process of printing the contrast plane and the plurality of calibration markers without delaying the printing process. Also, it becomes possible immediately after printing one or more calibration markers. These steps of the present invention allow avoiding a stall to wait for the recording medium to be transported to a curing stage and be brought back to the printing stage.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

**Claims**

1. A method for printing calibration markers (42) in a scanning inkjet printer, the inkjet printer comprising a pinning lamp (5) suitable for applying ultraviolet, UV, light to a UV light-curable ink, the method comprising:

   printing a contrast plane (45) on the recording medium (43) with UV light-curable ink of a first color;
   at least partially curing the contrast plane (45) printed on the recording medium (43) by applying ultraviolet, UV, light to the contrast plane (45) with the pinning lamp (5);
   printing a calibration marker (42) with UV light-curable ink of a second color onto the printed contrast plane (45) such that the printed contrast plane (45) forms a uniform background for the printed calibration marker (42), wherein the first color and the second color have a contrast ratio higher than 1, wherein the contrast ratio is the ratio of the luminance of the brightest color to that of the darkest color.

2. The method according to claim 1, further comprising curing the calibration marker printed on the recording medium by applying ultraviolet, UV, light to the plurality of calibration markers with the pinning lamp.

3. The method of claim 1, wherein the recording medium is transparent or meshed.

4. The method of any of the preceding claims, wherein the inkjet printer further comprises a scanner for scanning the calibration marker.

5. The method of any of the preceding claims, wherein the contrast ratio between the first color and the second color is at least 3, preferably at least 4.5.

6. The method of any of the preceding claims, wherein printing a contrast plane on the recording medium with UV light-curable ink of a first color comprises printing a plurality of contrast planes with UV light-curable ink of a first color, and wherein a calibration marker with UV light-curable is printed with ink of a second color onto each of the plurality of printed contrast planes such that each of the plurality of printed contrast planes forms a uniform background for one of the plurality of printed calibration markers.

7. The method of any of the preceding claims, wherein applying ultraviolet, UV, light to a UV light-curable ink comprises applying an intensity of the radiation emitted onto the ink in the range of 0.5 W/cm$^2$ - 8 W/cm$^2$, preferably 1 W/cm$^2$ - 4 W/cm$^2$.

**Patentansprüche**

1. Verfahren zum Drucken von Kalibriermarkem (42) in einem abtastenden Tintenstrahldrucker, wobei der Tintenstrahldrucker eine Pinlampe (5) aufweist, die dazu geeignet ist, ultraviolettes, UV, Licht auf eine mit ultraviolettem Licht aushärtbare Tinte zu strahlen, wobei das Verfahren umfasst:

   drucken einer Kontrastebene (45) auf das Aufzeichnungsmedium (43) mit einer mit ultraviolettem Licht aushärtbaren Tinte einer ersten Farbe;
   zumindest teilweise Aushärten der Kontrastebene (45), die auf das Aufzeichnungsmedium (43) gedruckt wurde, durch Strahlen von ultraviolettem, UV, Licht auf die Kontrastebene (45) mit der Pinlampe (5);
   drucken eines Kalibriermarkers (42) mit einer mit ultraviolettem Licht aushärtbaren Tinte einer zweiten Farbe auf die gedruckte Kontrastebene (45) derart, dass die gedruckte Kontrastebene (45) einen einheitlichen Hintergrund für den gedruckten Kalibriermarker (42) bildet, wobei die erste Farbe und die zweite Farbe ein Kontrastverhältnis größer als 1 haben, wobei das Kontrastverhältnis das Verhältnis der Luminanz der hellsten Farbe zu derjenigen der dunkelsten Farbe ist.

2. Verfahren nach Anspruch 1, weiterhin umfassend das Aushärten des Kalibriermarkers, der auf das Aufzeichnungsmedium gedruckt ist, durch Bestrahlen der mehreren Kalibriermarker mit ultraviolettem, UV, Licht mit der Pinlampe.

3. Verfahren nach Anspruch 1, bei dem das Aufzeichnungsmedium transparent oder netzförmig ist.

4. Verfahren nach einem der vorstehenden Ansprüche, bei dem der Tintenstrahldrucker weiterhin einen Scanner zum Scannen des Kalibriermarkers aufweist.

5. Verfahren nach einem der vorstehenden Ansprüche, bei dem das Kontrastverhältnis zwischen der ersten Farbe und der zweiten Farbe wenigstens 3, vorzugsweise wenigstens 4,5 beträgt.

6. Verfahren nach einem der vorstehenden Ansprüche, bei dem das Drucken einer Kontrastebene auf das Aufzeichnungsmedium mit durch ultraviolettes Licht aushärtbarer Tinte einer ersten Farbe das Drucken von mehreren Kontrastebenen mit durch ultraviolettes Licht aushärtbarer Tinte einer ersten Farbe einschließt und bei dem ein Kalibriermarker mit durch ultraviolettes Licht aushärtbarer Tinte einer zweiten Farbe auf jede der mehreren gedruckten Kontrastebenen gedruckt wird, derart, dass jede der mehreren gedruckten Kontrastebenen einen einheitlichen Hintergrund für einen der mehreren gedruckten Kalibriermarker bildet.

7. Verfahren nach einem der vorstehenden Ansprüche, bei dem das Bestrahlen einer durch ultraviolettes Licht aushärtbaren Tinte mit ultraviolettem, UV, Licht das Anwenden einer Intensität der auf die Tinte emittierten Strahlung im Bereich von 0,5 W/cm$^2$ bis 8 W/cm$^2$ vorzugsweise 1 W/cm$^2$ bis 4 W/cm$^2$ einschließt.

**Revendications**

1. Procédé pour imprimer des marqueurs d'étalonnage (42) dans une imprimante à jet d'encre à balayage, l'imprimante à jet d'encre comprenant une lampe de séchage (5) appropriée pour appliquer une lumière ultraviolette, UV, à une encre durcissable à la lumière UV, le procédé comprenant :

l'impression d'un plan de contraste (45) sur le support d'enregistrement (43) avec une encre durcissable à la lumière UV d'une première couleur ;
le durcissement au moins partiel du plan de contraste (45) imprimé sur le support d'enregistrement (43) en appliquant une lumière ultraviolette, UV, au plan de contraste (45) avec la lampe de séchage (5) ;
l'impression d'un marqueur d'étalonnage (42) avec une encre durcissable à la lumière UV d'une seconde couleur sur le plan de contraste imprimé (45) de telle sorte que le plan de contraste imprimé (45) forme un arrière-plan uniforme pour le marqueur d'étalonnage imprimé (42), dans lequel
la première couleur et la seconde couleur présentent un rapport de contraste supérieur à 1, dans lequel le rapport de contraste est le rapport de la luminance de la couleur la plus vive à celle de la couleur la plus sombre.

2. Procédé selon la revendication 1, comprenant en outre le durcissement du marqueur d'étalonnage imprimé sur le support d'enregistrement en appliquant une lumière ultraviolette, UV, à la pluralité de marqueurs d'étalonnage avec la lampe de séchage.

3. Procédé selon la revendication 1, dans lequel le support d'enregistrement est transparent ou maillé.

4. Procédé selon l'une quelconque des revendications précédentes, dans lequel l'imprimante à jet d'encre comprend en outre
un dispositif de balayage pour balayer le marqueur d'étalonnage.

5. Procédé selon l'une quelconque des revendications précédentes, dans lequel le rapport de contraste entre la première couleur et la seconde couleur est au moins 3, de préférence au moins 4,5.

6. Procédé selon l'une quelconque des revendications précédentes, dans lequel l'impression d'un plan de contraste sur le support d'enregistrement avec une encre durcissable à la lumière UV d'une première couleur comprend l'impression d'une pluralité de plans de contraste avec une encre durcissable à la lumière UV d'une première couleur et dans lequel un marqueur d'étalonnage avec une encre durcissable à la lumière UV est imprimé avec une encre d'une seconde couleur sur chaque plan de contraste imprimé de la pluralité de plans de contraste imprimés de telle sorte que chaque plan de contraste imprimé de la pluralité de plans de contraste imprimés forme un arrière-plan uniforme pour un marqueur d'étalonnage imprimé de la pluralité de marqueurs d'étalonnage imprimés.

7. Procédé selon l'une quelconque des revendications précédentes, dans lequel l'application d'une lumière ultraviolette, UV, à une encre durcissable à la lumière UV comprend l'application d'une intensité du rayonnement émis sur l'encre dans la plage de 0,5 W/cm$^2$ - 8 W/cm$^2$, de préférence 1 W/cm$^2$ - 4 W/cm$^2$.

**Figure 1**

Figure 2a

Figure 2b

Figure 2c

Figure 3

Figure 4a

Figure 4b

## REFERENCES CITED IN THE DESCRIPTION

**Patent documents cited in the description**

- US 2017341416 A1